# EUROPEAN PATENT APPLICATION

(11) **EP 4 585 632 A1**
(43) Date of publication of application: **16.07.2025**
(21) Application number: 24151930.5
(22) Date of filing: 15.01.2024
(51) Int. Cl.: C08G 59/40, C08G 59/68, C08L 63/00

(54) **HEAT-CURING EPOXY RESIN COMPOSITION SUITABLE FOR LOW CURING TEMPERATURE WITH GOOD ADHESION AND TOUGHENING ABILITIES**

(71) Applicant: Sika Technology AG, 6340 Baar (CH)
(72) Inventor: WEN, Weijian, Novi, 48374 (US)
(74) Representative: Sika Patent Attorneys

(57) **Abstract**

The present invention relates to thermosetting epoxy resin compositions comprising an epoxy resin, a dihydrazide curing agent, a boron trihalide-amine complex, a substituted urea and at least one toughness improver. The compositions feature good lap shear values in combination with good impact peel and T-peel properties when cured at a low curing temperature. The epoxy resin compositions are especially suitable for use as bodywork adhesive.

## Description

### Technical field

The invention relates to the field of thermosetting one-component epoxy resin compositions, especially for use as bodywork adhesive.

### Prior art

Thermosetting epoxy resin compositions have long been known. Efforts have already been made for some time to remedy or at least significantly reduce the great disadvantage of epoxy resin compositions, namely their brittleness, the effect of which is that the cured epoxy resin composition cracks or is destroyed under impact stress. Attempts have already been made to do this by the addition of impact modifiers or by chemical modification of epoxy resins.

EP2857428 describes an epoxy resin composition comprising an epoxy resin, a boron trihalide-amine complex and rubber particles with good storage stability that can be used in the production of fiber-reinforced composite materials with high heat resistance and toughness.

An important field of use of thermosetting epoxy resin compositions is in motor vehicle construction, especially in bonding in the bodywork. After the application of the epoxy resin composition, the bodywork is heated in the cathodic electrocoating oven, because of which the thermosetting epoxy resin composition is cured.

However, efforts are currently under way in the market to lower the temperature of the cathodic electrocoating ovens. Thus, there is a great need on the market for thermosetting epoxy resin compositions containing impact modifiers that cure even at relatively low temperatures, i.e. at a temperature of 130 to 140°C, even after a short time, typically 10 to 15 minutes. Further it was found that this is especially challenging for compositions containing high amounts of toughness improvers. There is therefore a need for toughened thermosetting one-component epoxy resin compositions which cure at lower temperatures even when containing high amounts of toughness improvers.

### Summary of the invention

It is therefore an object of the present invention to provide toughened thermosetting one-component epoxy resin compositions that have sufficient mechanical properties, especially lap shear strength, T-peel and impact peal performance, after shorter curing times at lower temperatures, especially 10 minutes at 140°C.

This object was surprisingly achieved by a thermosetting one-component epoxy resin composition as claimed in claim 1. This epoxy resin composition has particularly good usability as a one-component thermosetting adhesive, especially as a thermosetting one-component bodywork adhesive in motor vehicle construction.

### Ways of executing the invention

The present invention relates to thermosetting one-component epoxy resin compositions comprising:
a) at least one epoxy resin **A** having an average of more than one epoxy group per molecule;
b) at least one curing agent **B** for epoxy resins, where the curing agent **B** is a dihydrazide, preferably selected from the group consisting of aromatic dicarboxylic dihydrazide **B1** and aliphatic dicarboxylic dihydrazide **B2,** most preferably aliphatic dicarboxylic dihydrazide **B2;** and
c) at least one boron trihalide-amine complex **C1**;
d) at least one substituted urea **C2**;
e) at least one toughness improver **D.**

The molar ratio of the at least one boron trihalide-amine complex **C1** to the at least one substituted urea **C2** (**C1/C2**) is 0.75 - 10 and the molar ratio of the at least one curing agent **B** for epoxy resins to the at least one boron trihalide-amine complex **C1 (B/C1)** is 4.5 - 55.

In this document, the use of the term "independently" in connection with substituents, radicals or groups should be interpreted such that the substituents, radicals or groups having the same designation in the same molecule may occur simultaneously with different meanings.

The prefix "poly" in substance names such as "polyol", "polyisocyanate", "polyether" or "polyamine" in the present document indicates that the respective substance, in a formal sense, contains more than one of the functional groups that occur in its name per molecule.

In the present document, "molecular weight" is understood to mean the molar mass (in grams per mole) of a molecule. "Average molecular weight" is understood to mean the number-average molecular weight Mₙ of an oligomeric or polymeric mixture of molecules, which is typically determined by means of GPC against polystyrene as standard.

A "primary hydroxyl group" refers to an OH group bonded to a carbon atom having two hydrogens.

In the present document, the term "primary amino group" refers to an NH₂ group bonded to one organic radical, while the term "secondary amino group" refers to an NH group bonded to two organic radicals which may also together be part of a ring. Accordingly, an amine having one primary amino group is referred to as "primary amine", one having a secondary amino group correspondingly as "secondary amine", and one having a tertiary amino group as "tertiary amine".

In the present document, "room temperature" refers to a temperature of 23°C.

The epoxy resin **A** having an average of more than one epoxy group per molecule is preferably a liquid epoxy resin or a solid epoxy resin. The term "solid epoxy resin" is very well known to a person skilled in the art of epoxies and is used in contrast to "liquid epoxy resins". The glass transition temperature of solid resins is above room temperature, meaning that they can be comminuted at room temperature to give free-flowing powders.

Preferred epoxy resins have the formula (I)

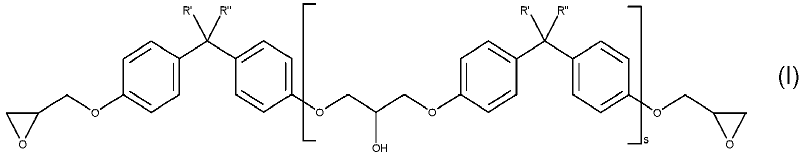

The substituents R' and R" here are independently either H or CH₃.

In solid epoxy resins, the index s has a value of > 1.5, especially of 2 to 12.

Such solid epoxy resins are commercially available, for example from Dow or Huntsman or Hexion.

Compounds of the formula (I) having an index s of 1 to 1.5 are referred to as semisolid epoxy resins by the person skilled in the art. For this present invention, they are likewise considered to be solid resins. However, preferred solid epoxy resins are epoxy resins in the narrower sense, i.e. where the index s has a value of > 1.5.

In liquid epoxy resins, the index s has a value of less than 1. Preferably, s has a value of less than 0.2.

Preference is thus given to diglycidyl ethers of bisphenol A (DGEBA), of bisphenol F, and of bisphenol A/F. Such liquid resins are available, for example, as Araldite^{®} GY 250, Araldite^{®} PY 304, Araldite^{®} GY 282 (Huntsman) or D.E.R.^{™} 331 or D.E.R.^{™} 330 (Dow) or Epikote 828 (Hexion).

Further suitable epoxy resins **A** are what are called epoxy novolaks. More particularly, these are phenol or cresol epoxy novolaks.

Such epoxy resins are commercially available under the EPN or ECN and Tactix^{®} trade names from Huntsman or from the D.E.N.^{™} product series from Dow Chemical.

The epoxy resin **A** is preferably an epoxy resin of the formula (I), especially a liquid epoxy resin of the formula (I).

In a particularly preferred embodiment, the thermosetting one-component epoxy resin composition contains both at least one liquid epoxy resin of the formula (II) with s < 1, especially less than 0.2, and at least one solid epoxy resin of the formula (I) with s > 1.5, especially from 2 to 12.

The proportion of the epoxy resin **A** is preferably 15-50% by weight, more preferably 20-40% by weight, most preferably 25-35%, based on the total weight of the thermosetting one-component epoxy resin composition.

It is further advantageous when 50-100% by weight, especially 80-100% by weight of the epoxy resin **A** is an aforementioned liquid epoxy resin.

It is further advantageous when 0-30% by weight, especially 0-20% by weight, more preferably 0-15% by weight, of the epoxy resin **A** is an aforementioned solid epoxy resin.

The composition of the invention also contains at least one curing agent **B** for epoxy resins. The curing agent **B** is a dihydrazide, which is preferably selected from the group consisting of aromatic dicarboxylic dihydrazide **B1** and aliphatic dicarboxylic dihydrazide **B2.**

If the curing agent **B** is an aromatic dicarboxylic dihydrazide **B1,** it is preferably selected from the group consisting of isophthalic dihydrazide and/or terephthalic dihydrazide, more preferably isophthalic dihydrazide.

Suitable dihydrazides are commercially available, for example, from Otsuka Chemical Co., Ltd under the Ajicure^{®} trade name (from Ajinomoto Fine-TechnoCo., Inc.) and under the Technicure^{®} trade name (from A&C Catalysts).

Preferably, the curing agent **B** is an aliphatic dicarboxylic dihydrazide **B2,** preferably selected from the group consisting of glutaric dihydrazide, adipic dihydrazide, pimelic dihydrazide, 8,12-eicosadienedioic acid 1,20-dihydrazide and 4-isopropyl-2,5-dioxoimidazolidine-1,3-di(propionohydrazide).

Preference is given to adipic dihydrazide, 8,12-eicosadienedioic acid 1,20-dihydrazide (UDH) and 4-isopropyl-2,5-dioxoimidazolidine-1,3-di(propionohydrazide) (VDH). Most preferred is adipic dihydrazide.

Suitable dihydrazides are commercially available, for example, from Otsuka Chemical Co., Ltd under the Ajicure^{®} trade name (from Ajinomoto Fine-TechnoCo., Inc.) and under the Technicure^{®} trade name (from A&C Catalysts)

Preferably, the ratio of the proportion of the sum of the epoxy groups of the epoxy resin **A** in mol / proportion of curing agent **B** in mol **(A/B)** is 2-6, preferably 3-5, most preferably 3.5-4.5. This is advantageous in that, within this range, particularly advantageous values are obtained for mechanical properties, especially lap shear strength and impact peel of the cured composition.

It may further be advantageous when more than 80% by weight, preferably more than 90% by weight, especially more than 95% by weight, especially preferably more than 98% by weight, most preferably more than 99% by weight, based on the total weight of the thermosetting one-component epoxy resin composition, of molecules able to act as curing agents for epoxy resins at temperatures between 100-220°C, are the molecules of the curing agent **B.**

It is further advantageous when the thermosetting one-component epoxy resin composition includes a minimum amount of dicyandiamide. If the epoxy resin composition includes dicyandiamide, the weight ratio of the total amount of curing agent **B** to dicyandiamide (**B**/dicyandiamide) is ≥ 0.5, ≥ 0.75, ≥ 1, ≥ 2, ≥ 5, especially ≥ 10, preferably ≥ 50, more preferably ≥ 100.

The amount of dicyandiamide is preferably less than 5% by weight, less than 3% by weight, less than 2% by weight, especially less than 1% by weight, preferably less than 0.5% by weight, more preferably less than 0.3% by weight, most preferably less than 0.1% by weight, based on the total weight of the epoxy resin composition. More preferably, the thermosetting one-component epoxy resin composition does not include any dicyandiamide.

The thermosetting one-component epoxy resin composition additionally contains at least one boron trihalide-amine complex **C1**.

The boron trihalide-amine complex **C1** is preferably a complex composed of boron halide such as boron trihalide or boron trifluoride, and an amine, preferably an organic amine. More preferably, the at least one boron trihalide-amine complex **C1** is preferably selected from the list consisting of boron trichloride-amine complex and boron trifluoride-amine complex, preferably boron trichloride-amine complex.

Preferred examples are selected from the list consisting of a boron trifluoride-aniline complex, a boron trifluoride-p-chloroaniline complex, a boron trifluoride-ethylamine complex, a boron trifluoride-isopropylamine complex, a boron trifluoride-benzylamine complex, a boron trifluoride-dimethylamine complex, a boron trifluoride-diethylamine complex, a boron trifluoride-dibutylamine complex, a boron trifluoride-piperidine complex, a boron trifluoride-dibenzylamine complex, compounds in which fluorine atoms in these compounds are replaced with chlorine atoms, and a boron trichloride-dimethyloctylamine complex. Most preferably the boron trihalide-amine complex **C1** is a boron trichloride-dimethyloctylamine complex.

Commercially available boron trihalide-amine complexes **C1** are for example Leecure 38-239B from Leepoxy, or DY 9577 from Huntsman.

The molar ratio of the at least one curing agent **B** for epoxy resins to the at least one boron trihalide-amine complex **C1 (B/C1)** is 4.5 - 55. A molar ratio lower than 4.5 has the disadvantage of reduced values for T-peel and impact peel. A molar ratio higher than 55 has the disadvantage of reduced values for lap shear strength, T-peel and impact peel. This can be seen, for example, in the comparison of E1 and E4 - E7 with Ref.2 in table 1.

Preferably, the molar ratio of the at least one curing agent **B** for epoxy resins to the at least one boron trihalide-amine complex **C1 (B/C1)** is 7 - 35, preferably 8.5 - 17.5, more preferably 5.5 - 14. This molar ratio is advantageous with respect to a combination of high values for lap shear strength, T-peel and impact peel. This can be seen, for example, in the comparison of E1 with E4 - E7 in table 1.

It can also be preferable, if the molar ratio of the at least one curing agent **B** for epoxy resins to the at least one boron trihalide-amine complex **C1 (B/C1)** is 6 - 14, preferably 8 - 10. This molar ratio is advantageous with respect of high values for lap shear strength but also having good values for T-peel and impact peel. This can be seen, for example, in the comparison of E6 with E1, E4, E5 and E7 in table 1.

The thermosetting one-component epoxy resin composition additionally contains at least one substituted urea **C2**.

This preferably comprises substituted ureas of the formula (II) 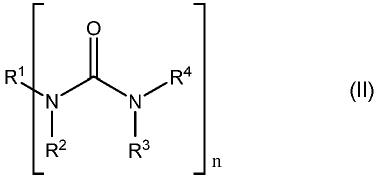 in which R¹ and R² are independently hydrogen atoms or monovalent alkyl radicals which have 1 to 10 carbon atoms and optionally also comprise oxygen atoms, nitrogen atoms and/or aromatic units or together form a divalent alkyl radical having 1 to 10 carbon atoms, and which may additionally comprise oxygen atoms, nitrogen atoms or aromatic units; R³ and R⁴ are independently hydrogen atoms or monovalent alkyl radicals which have 1 to 10 carbon atoms and optionally also comprise oxygen atoms or nitrogen atoms; and the index n has a value of 1 or 2.

The substituted urea of the formula (II) is preferably selected from the group consisting of p-chlorophenyl-N,N-dimethylurea (monuron), 3-phenyl-1,1-dimethylurea (fenuron), 3,4-dichlorophenyl-N,N-dimethylurea (diuron), N-methylurea, N,N-dimethylurea, N,N'-dimethylurea, N,N,N'-trimethylurea, N,N,N',N'-tetramethylurea and derivatives thereof, where some or all methyl groups are instead ethyl groups.

Preferably, R¹ and R² are independently hydrogen atoms or monovalent linear or branched alkyl radicals which have 1 to 10, preferably 1 to 5, more preferably 1 to 4, carbon atoms and optionally together constitute a divalent alkyl radical that forms a ring structure with the adjacent nitrogen atom, and/or R³ and R⁴ independently represent hydrogen atoms or monovalent linear or branched alkyl radicals which have 1 to 10, preferably 1 to 5, more preferably 1 to 4, carbon atoms and optionally together constitute a divalent alkyl radical that forms a ring structure with the adjacent nitrogen atom.

Very particularly preferred substituted ureas of the formula (II) are those in which R¹ and R² in formula (II) are both hydrogen atoms and/or in which R³ and R⁴ are both ethyl or methyl groups, preferably methyl groups.

Further preferred urea derivatives of the formula (II) include those in which R¹, R², R³ and R⁴ in formula (II) all represent ethyl or methyl, preferably methyl groups, or in which R¹, R² and R³ represent ethyl or methyl, preferably methyl, and R⁴ is a hydrogen atom, or where R¹ and R⁴ both represent hydrogen atoms, and R² and R³ both represent ethyl or methyl groups, preferably methyl groups.

Suitable urea derivatives are commercially available, for example, under the Dyhard ^{®} trade name (from AlzChem Group AG), under the Omicure^{®} trade name (from CVC Thermoset Specialties), under the Amicure^{®} trade name (from Evonik) and from Sigma Aldrich.

It is further preferred if the thermosetting one-component epoxy resin composition contains accelerators for epoxy resins other than the before mentioned at least one boron trihalide-amine complex **C1** and the at least one substituted urea **C2** in an amount of less than 0.5 % by weight, less than 0.1 % by weight, less than 0.05 % by weight, especially less than 0.01 % by weight, preferably less than 0.001 % by weight, based on the total weight of the epoxy resin composition. More preferably, the thermosetting one-component epoxy resin composition does not include any accelerators for epoxy resins other than the before mentioned at least one boron trihalide-amine complex **C1** and the at least one substituted urea **C2**.

The molar ratio of the at least one boron trihalide-amine complex **C1** to the at least one substituted urea **C2 (C1/C2)** is 0.75 - 10. A molar ratio higher than 10 has the disadvantage of reduced values for T-peel and impact peel. A molar ratio lower than 0.75 has the disadvantage of reduced values for lap shear strength, T-peel and impact peel. This can be seen, for example, in the comparison of E1 and E4 - E7 with Ref.2 in table 1.

Preferably, the molar ratio of the at least one boron trihalide-amine complex **C1** to the at least one substituted urea **C2 (C1/C2)** is 1.5 - 8, preferably 3-6, more preferably 4-5. This molar ratio is advantageous with respect to a combination of high values for lap shear strength, T-peel and impact peel. This can be seen, for example, in the comparison of E1 with E4 - E7 in table 1.

It can also be preferable, if the molar ratio of the at least one boron trihalide-amine complex **C1** to the at least one substituted urea **C2 (C1/C2)** is 4 - 8, preferably 5 - 6. This molar ratio is advantageous with respect of high values for lap shear strength but also having good values for T-peel and impact peel. This can be seen, for example, in the comparison of E6 with E1, E4, E5 and E7 in table 1.

It can be further advantageous if the molar ratio of the at least one curing agent **B** for epoxy resins to the sum of the molar amount of the at least one boron trihalide-amine complex **C1** and the at least one substituted urea **C2 (B/(C1+C2))** is 5 - 18, preferably 7 - 13.5, more preferably 8 - 10. This molar ratio is advantageous with respect to a combination of high values for lap shear strength, T-peel and impact peel. This can be seen, for example, in the comparison of E1 with E4 - E7 in table 1.

The thermosetting one-component epoxy resin composition
at least one toughness improver **D.** The toughness improvers **D** may be solid or liquid, preferably liquid.

The toughness improver **D** is selected from the group consisting of terminally blocked polyurethane polymers **D1,** liquid rubbers **D2** and core-shell polymers **D3.** The toughness improver **D** is preferably selected from the group consisting of terminally blocked polyurethane polymers **D1** and liquid rubbers **D2.** Particular preference is given to a terminally blocked polyurethane polymer **D1.**

It is preferably a terminally blocked polyurethane polymer **D1** blocked with a blocking group that is eliminated at a temperature above 100°C.

Preferred blocking groups are especially firstly phenols or bisphenols. Preferred examples of such phenols and bisphenols are especially phenol, cresol, resorcinol, catechol, 4-Hydroxyanisole (HQMME), cardanol (3-pentadecenylphenol (from cashewnutshell oil)), nonylphenol, phenols that have been reacted with styrene or dicyclopentadiene, bisphenol A, bisphenol F and 2,2'-diallylbisphenol A.

The terminally blocked polyurethane prepolymer is prepared from a linear or branched polyurethane prepolymer terminated by isocyanate groups with one or more isocyanate-reactive compounds. If two or more such isocyanate-reactive compounds are used, the reaction can be effected sequentially or with a mixture of these compounds.

The reaction is preferably effected in such a way that the one or more isocyanate-reactive compounds are used stoichiometrically or in a stoichiometric excess in order to ensure that all NCO groups have been converted.

The polyurethane prepolymer with isocyanate end groups can be prepared from at least one diisocyanate or triisocyanate and from a polymer **Q_{PM}** having terminal amino, thiol or hydroxyl groups and/or from an optionally substituted polyphenol **Q_{PP},** preferably polymer **Q_{PM}** having terminal amino, thiol or hydroxyl groups.

Suitable diisocyanates are aliphatic, cycloaliphatic, aromatic or araliphatic diisocyanates, especially commercial products such as methylene diphenyl diisocyanate (MDI), hexamethylene diisocyanate (HDI), toluene diisocyanate (TDI), toluidine diisocyanate (TODI), isophorone diisocyanate (IPDI), trimethylhexamethylene diisocyanate (TMDI), 2,5- or 2,6-bis(isocyanatomethyl)bicyclo[2.2.1]heptane, naphthalene 1,5-diisocyanate (NDI), dicyclohexylmethyl diisocyanate (H₁₂MDI), p-phenylene diisocyanate (PPDI), m-tetramethylxylylene diisocyanate (TMXDI), etc. and dimers thereof. Preference is given to HDI, IPDI, MDI or TDI.

Suitable triisocyanates are trimers or biurets of aliphatic, cycloaliphatic, aromatic or araliphatic diisocyanates, especially the isocyanurates and biurets of the diisocyanates described in the previous paragraph. It is of course also possible to use suitable mixtures of di- or triisocyanates.

Especially suitable polymers **Q_{PM}** having terminal amino, thiol or hydroxyl groups are polymers **Q_{PM}** having two or three terminal amino, thiol or hydroxyl groups.

The polymers **Q_{PM}** advantageously have an equivalent weight of 300-6000, especially of 600-4000, preferably of 700-2200, g/equivalent of NCO-reactive groups.

Preferred polymers **Q_{PM}** are polyols having average molecular weights between 600 and 6000 daltons, selected from the group consisting of polyethylene glycols, polypropylene glycols, polyethylene glycol-polypropylene glycol block polymers, polybutylene glycols, hydroxyl-terminated polybutadienes, hydroxyl-terminated butadiene-acrylonitrile copolymers and mixtures thereof.

Especially preferred polymers **Q_{PM}** are α-ω-dihydroxy polyalkylene glycols having C₂-C₆-alkylene groups or having mixed C₂-C₆-alkylene groups, terminated by amino, thiol or, preferably, hydroxyl groups. Particular preference is given to polypropylene glycols or polybutylene glycols. Particular preference is further given to hydroxyl group-terminated polyoxybutylenes.

Especially suitable polyphenols **Q_{PP}** are bis-, tris- and tetraphenols. This is understood to mean not just straight phenols but optionally also substituted phenols. The nature of the substitution may be very varied. More particularly, this is understood to mean substitution directly on the aromatic ring to which the phenolic OH group is bonded. Phenols are additionally understood to mean not just monocyclic aromatics but also polycyclic or fused aromatics or heteroaromatics that have the phenolic OH group directly on the aromatic or heteroaromatic system.

In a preferred embodiment, the polyurethane prepolymer is prepared from at least one diisocyanate or triisocyanate and from a polymer **Q_{PM}** having terminal amino, thiol or hydroxyl groups. The polyurethane prepolymer is prepared in a manner known to the person skilled in the art of polyurethane, especially by using the diisocyanate or triisocyanate in a stoichiometric excess in relation to the amino, thiol or hydroxyl groups of the polymer **Q_{PM}.**

The polyurethane prepolymer having isocyanate end groups preferably has elastic character. It preferably exhibits a glass transition temperature Tg of less than 0°C.

The toughness improver D may be a liquid rubber **D2.** This may be, for example, a carboxy- or epoxy-terminated polymer.

In a first embodiment, this liquid rubber may be a carboxy- or epoxy-terminated acrylonitrile/butadiene copolymer or derivative thereof. Such liquid rubbers are commercially available, for example, under the Hypro / Hypox^{®} CTBN and CTBNX and ETBN name from Emerald Performance Materials. Suitable derivatives are especially elastomer-modified prepolymers having epoxy groups, as sold commercially under the Polydis^{®} product line, especially from the Polydis^{®} 36. product line, by Struktol^{®} (Schill+Seilacher Gruppe, Germany) or under the Albipox product line (Evonik, Germany).

In a second embodiment, this liquid rubber may be a polyacrylate liquid rubber which is fully miscible with liquid epoxy resins and separates to form microdroplets only in the course of curing of the epoxy resin matrix. Such polyacrylate liquid rubbers are available, for example, under the 20208-XPA name from Dow.

It is of course also possible to use mixtures of liquid rubbers, especially mixtures of carboxy- or epoxy-terminated acrylonitrile/butadiene copolymers or derivatives thereof.

The toughness improver **D,** in a third embodiment, may be a core-shell polymer **D3.** Core-shell polymers consist of an elastic core polymer and a rigid shell polymer. Particularly suitable core-shell polymers consist of a core of elastic acrylate or butadiene polymer encased by a rigid shell of a rigid thermoplastic polymer. This core-shell structure either forms spontaneously as a result of separation of a block copolymer or is defined by the conduct of the polymerization as a latex or suspension polymerization with subsequent grafting. Preferred core-shell polymers are what are called MBS polymers, which are commercially available under the Clearstrength^{™} trade name from Arkema, Paraloid^{™} from Dow or F-351 ^{™} from Zeon.

Preferably, the amount of at least one toughness improver **D** that is a terminally blocked polyurethane prepolymer of the formula (I) is from 10 - 50 wt.-%, preferably 15 - 35 wt.-%, based on the total weight of the thermosetting one-component epoxy resin composition.

Preferably, the weight ratio of the at least one epoxy resin **A** to the at least one toughness improver **D (A/D)** is from 0.5 - 1.8, preferably from 1.0 - 1.7, more preferably 1.2 - 1.6. Especially if said toughness improver **D** is a terminally blocked polyurethane polymer **D1.** This molar ratio is advantageous with respect to high values for T-peel and impact peel combined with good values for lap shear strength. This can be seen, for example, in the comparison of E1 with E2 and E3 in table 1.

In a further preferred if the thermosetting one-component epoxy resin composition additionally comprises at least one filler **F.** Preference is given here to mica, talc, kaolin, wollastonite, feldspar, titanium oxide, syenite, chlorite, bentonite, montmorillonite, calcium carbonate (precipitated or ground), dolomite, quartz, silicas (fused or precipitated), cristobalite, calcium oxide, aluminum hydroxide, magnesium oxide, hollow ceramic beads, hollow glass beads, hollow organic beads, glass beads, color pigments. Particular preference is given to fillers selected from the group consisting of calcium carbonate, calcium oxide, talc, titanium oxide, and fumed silicas.

Advantageously, the total proportion of the overall filler **F** is 15-50 % by weight preferably 10-35 % by weight, more preferably 12.5-22.5% by weight, based on the total weight of the thermosetting one-component epoxy resin composition.

The composition can additionally comprise at least one epoxy-bearing reactive diluent **G.** Such reactive diluents are known to the person skilled in the art. Preferred examples of epoxy-bearing reactive diluents are:
- glycidyl ethers of monofunctional, saturated or unsaturated, branched or unbranched, cyclic or open-chain, C₄-C₃₀ alcohols, e.g. butanol glycidyl ether, hexanol glycidyl ether, 2-ethylhexanol glycidyl ether, allyl glycidyl ether, tetrahydrofurfuryl and furfuryl glycidyl ether, trimethoxysilyl glycidyl ether, and the like;
- glycidyl ethers of difunctional, saturated or unsaturated, branched or unbranched, cyclic or open-chain, C₂-C₃₀ alcohols, e.g. ethylene glycol glycidyl ether, butanediol glycidyl ether, hexanediol glycidyl ether, octanediol glycidyl ether, cyclohexanedimethanol diglycidyl ether, neopentyl glycol diglycidyl ether, and the like;

- glycidyl ethers of tri- or polyfunctional, saturated or unsaturated, branched or unbranched, cyclic or open-chain, alcohols, such as epoxidized castor oil, epoxidized trimethylolpropane, epoxidized pentaerythritol or polyglycidyl ethers of aliphatic polyols, such as sorbitol, glycerol, trimethylolpropane, and the like;
- glycidyl ethers of phenol compounds and aniline compounds, such as phenyl glycidyl ether, cresyl glycidyl ether, p-tert-butylphenyl glycidyl ether, nonylphenol glycidyl ether, 3-n-pentadecenyl glycidyl ether (from cashewnutshell oil), N,N-diglycidylaniline, and the like;
- epoxidized amines, such as N,N-diglycidylcyclohexylamine, and the like;
- epoxidized mono- or dicarboxylic acids, such as glycidyl neodecanoate, glycidyl methacrylate, glycidyl benzoate, diglycidyl phthalate, tetrahydrophthalate and hexahydrophthalate, diglycidyl esters of dimeric fatty acids, and the like;
- epoxidized di- or trifunctional, low to high molecular weight polyether polyols, such as polyethylene glycol diglycidyl ether, polypropylene glycol diglycidyl ether, and the like.

Particular preference is given to hexanediol diglycidyl ether, cresyl glycidyl ether, p-tert-butylphenyl glycidyl ether, polypropylene glycol diglycidyl ether and polyethylene glycol diglycidyl ether.

The total proportion of the epoxy-bearing reactive diluent **G,** if contained, can be from 0.1-15% by weight, preferably 0.1-5% by weight, especially preferably 0.1-2% by weight, more preferably 0.2-1% by weight, based on the total weight of the thermosetting one-component epoxy resin composition.

The composition may include further constituents, especially catalysts, stabilizers, especially heat and/or light stabilizers, thixotropic agents, plasticizers, solvents, mineral or organic fillers, blowing agents, dyes and pigments, anticorrosives, surfactants, defoamers and adhesion promoters.

Suitable plasticizers are especially phenol alkylsulfonates or N-butylbenzamide, as commercially available as Mesamoll^{®} or Dellatol BBS from Bayer.

Suitable stabilizers are especially optionally substituted phenols such as BHT or Wingstay^{®} T (Elkem), sterically hindered amines or N-oxyl compounds such as TEMPO (Evonik).

It is advantageous when the epoxy resin composition of the invention has a viscosity at 25°C of 500-4500 Pa*s, especially 600-2000 Pa*s, preferably 600-1200 Pa*s, especially measured with a rheometer in oscillation using a plate-plate geometry with the following parameters: 5 Hz, measurement gap 1 mm, plate-plate diameter 25 mm, 1% deformation. This is advantageous in that this assures good applicability.

It has been found that the thermosetting one-component epoxy resin compositions described are particularly suitable for use as one-component thermosetting adhesives, especially as a thermosetting one-component bodywork adhesive in motor vehicle construction. Such a one-component adhesive has a range of possible uses. Such adhesives are required for the bonding of heat-stable materials. Heat-stable materials are understood to mean materials which are dimensionally stable at a curing temperature of 100 - 220°C, preferably 120 - 200°C, at least during the curing time. In particular, these are metals and plastics, such as ABS, polyamide, polyphenylene ether, composite materials, such as SMC, unsaturated polyesters GFP, epoxy or acrylate composite materials. Preference is given to the use in which at least one material is a metal. A particularly preferred use is considered to be the bonding of identical or different metals, especially in bodywork construction in the automobile industry. The preferred metals are in particular steel, especially electrolytically galvanized, hot-dip-galvanized or oiled steel, Bonazinc-coated steel, and post-phosphated steel, and also aluminum, especially in the variants which typically occur in automobile construction.

A further aspect of the present invention relates to a process for the bonding of heat-stable substrates, which comprises the stages:
i) applying a thermosetting one-component epoxy resin composition as described in detail above to the surface of a heat-stable substrate **S1,** especially of a metal;
ii) contacting the thermosetting one-component epoxy resin composition applied with the surface of a further heat-stable substrate **S2,** especially of a metal;
iii) heating the composition to a temperature of 100-220°C, especially of 120-200°C, preferably between 130 and 150°C, more preferably between 130 and 140°C.

The substrate **S2** consists here of the same material as or a different material from the substrate **S1**. The substrates **S1** and/or **S2** are in particular the aforementioned metals and plastics.

Preferably, in step iii), the composition is heated to a temperature of 100-220°C, especially of 120-200°C, preferably between 130 and 150°C, more preferably between 130 and 140°C, and the composition is left at the aforementioned temperature for 10 min - 6 h, 10 min - 2 h, 10 min - 60 min, 10 min - 30 min, 10 min - 20 min, more preferably 10 min - 15 min.

Such a method of bonding heat-stable materials results in an adhesive-bonded article. Such an article is preferably a vehicle or part of a vehicle.

A further aspect of the present invention accordingly relates to an adhesive-bonded article obtained from the abovementioned process. Furthermore, the compositions according to the invention are suitable not only for automobile construction but also for other fields of use. Particular mention should be made of related applications in the construction of transportation means, such as ships, trucks, buses or rail vehicles, or in the construction of consumer goods, such as, for example, washing machines.

The materials adhesive-bonded by means of a composition according to the invention are used at temperatures between typically 120°C and -40°C, preferably between 100°C and -40°C, in particular between 80°C and -40°C.

A particularly preferred use of the thermosetting one-component epoxy resin composition of the invention is the use thereof as a thermosetting one-component bodywork adhesive in motor vehicle construction or as a stiffening compound or as a foamable, thermosetting composition for the reinforcement of voids in structural components and reinforcing elements.

A further aspect of the present invention relates to a cured epoxy resin composition as obtained by heating a thermosetting one-component epoxy resin composition as described in detail above.

More preferably, the compositions of the invention have the following properties:
- LSS, measured as described in the experimental section, of > 24 MPa, especially ≥ 24.5 MPa, especially ≥ 25 MPa;
- T-peel, measured as described in the experimental section, of ≥ 10 N/mm, especially ≥ 15 N/mm, especially ≥ 21 N/mm.
- IP, measured as described in the experimental section, of ≥ 20 N/mm, especially ≥ 40 N/mm, especially ≥ 50 N/mm.

### Examples

Some examples which further illustrate the invention, but which are not intended to restrict the scope of the invention in any way, are cited below.

### Preparation of the toughness improver ("D1")

150 g of poly-THF 2000 (OH number 57 mg/g KOH) and 150 of PolyBD R45V (OH number 46 mg/g KOH) were dried under vacuum at 105°C for 30 minutes. Once the temperature had been reduced to 90°C, 61.5 g of IPDI and 0.14 g of dibutyltin dilaurate were added. The reaction was carried out under vacuum at 90°C until the NCO content was constant at 3.10% after 2.0 h (calculated NCO content: 3.15%). Subsequently, Cardolite NC-700 was added as blocking agent (1.2 times excess of blocking agent to the measured NCO content) and stirring was continued at 105°C under vacuum until it was no longer possible to detect any free NCO.

| | |
|---|---|
| A1 | Liquid aromatic epoxy resin, D.E.R. 331 (bisphenol A diglycidyl ether), DOW |
| A2 | Solid aromatic epoxy resin, D.E.R. 727 (bisphenol A diglycidyl ether), DOW |
| B2 | Adipic dihydrazide (ADH), CAS: 1071-93-8, Otsuka ADH/S (median particle size D50 of 4-15 µm), Otsuka Chemical Co., Mw: 174.20 g/mol |
| DICY | Dicyandiamide, Alzchem |
| C1 | N,N-dimethylurea, Mw: 88.11 g/mol, Sigma Aldrich |
| C2 | Boron trichloride-dimethyloctylamine complex, Mw: 274.46 g/mol, Leecure 38-239B, Leepoxy |
| F | Filler mixture of pyrogenic silica and calcium oxide in a weight ratio of 1:2. |
| | Poly-THF 2000 (difunctional polybutylene glycol) (OH equivalent weight = about 1000 g/OH equivalent), BASF |
| | PolyBD R45V (hydroxyl-terminated polybutadiene) (OH equivalent weight = about 1230 g/OH equivalent), Cray Valley |
| | Isophorone diisocyanate (= *"IPDI"*)*,* Evonik |
| | Cardolite NC-700 (cardanol, meta-substituted alkenylmonophenol), Cardolite |

Raw materials used.

### Production of the compositions

The reference compositions Ref.1-Ref.3 and the inventive compositions E1 to E7 were produced according to the compositions in table 1, wherein the stated amounts are in parts by weight. The ratio of the proportion of the sum of the epoxy groups of the epoxy resin **A** in mol / proportion of curing agent **B** in mol **(A/B)** is 4.25. In case dicyandiamide was used, the ratio was 5.5.

### Test methods:

### Lap shear strength (LSS) (DIN EN 1465)

Cleaned test specimens of Elo H420 steel (thickness 1.5 mm) that had been reoiled with Anticorit PL 3802-39S were bonded with the adhesive over a bonding area of 25.4 x 12.5 mm with glass beads as spacer in a layer thickness of 0.25 mm, and cured at oven temperature 140°C for 10 min object temperature. Lap shear strength was determined on a tensile tester at a strain rate of 10 mm/min in a triple determination to DIN EN 1465 at 23 °C.

### T-peel strength (T-peel) (ISO 11339)

The determination is in line with ISO 11339. Peel strength was determined with the following arrangement (dimensions in mm):

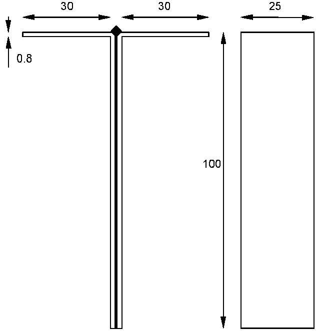

Substrate degreased with heptane and re-oiled with 3 g/m² of Anticorit PL 3802-39S (from Fuchs Schmierstoffe).
Adhesive thickness: 0.25 mm, spacers: glass beads
Baking: 10 min at 140°C
Testing speed: 100 mm/min
Testing temperature: 23 °C

### Impact peel strength (IP) (to ISO 11343)

The specimens were produced with the adhesive and DC04+ZE steel with dimensions of 90 x 20 x 0.8 mm. The bonding area here was 20 x 30 mm at a layer thickness of 0.25 mm with glass beads as spacer. The samples were cured under the following conditions:
140°C for 10 min object temperature
Impact peel strength was measured at 23°C as a triple determination on a Zwick 450 impact pendulum. The impact peel strength reported is the average force in N/mm under the measurement curve from 25% to 90% to ISO11343.

### Viscosity/storage stability of compositions

Viscosity measurements of the compositions were effected 1 d after production on an Anton Paar MCR 101 rheometer by oscillation using a plate-plate geometry at a temperature of 25°C with the following parameters: 5 Hz, measurement gap 1 mm, plate-plate diameter 25 mm, 0.01-10% deformation, determination of A4 complex viscosity h* determined at 10% deformation. The compositions E1 - E7 had a viscosity of within the range of 600-1200 Pa*s.

**Table 1, * = did not cure**

| | Ref.1 | Ref.2 | Ref.3 | E1 | E2 | E3 | E4 | E5 | E1 | E6 | E7 |
|---|---|---|---|---|---|---|---|---|---|---|---|
| A1 | 30 | 30 | 30 | 30 | 30 | 30 | 30 | 30 | 30 | 30 | 30 |
| A2 | 3 | 3 | 3 | 3 | 3 | 3 | 3 | 3 | 3 | 3 | 3 |
| D1 | 45 | 45 | 45 | 45 | 30 | 15 | 45 | 45 | 45 | 45 | 45 |
| F | 18.6 | 14.93 | 14 | 13.93 | 28.93 | 43.93 | 14.43 | 14.18 | 13.93 | 13.68 | 13.43 |
| B2 | 0 | 7 | 7 | 7 | 7 | 7 | 7 | 7 | 7 | 7 | 7 |
| C2 | 0.4 | 0.07 | 0 | 0.07 | 0.07 | 0.07 | 0.07 | 0.07 | 0.07 | 0.07 | 0.07 |
| C1 | 0 | 0 | 1 | 1 | 1 | 1 | 0.5 | 0.75 | 1 | 1.25 | 1.5 |
| Dicy | 3 | 0 | 0 | 0 | 0 | 0 | 0 | 0 | 0 | 0 | 0 |
| **Total (wt.-%)** | **100** | **100** | **100** | **100** | **100** | **100** | **100** | **100** | **100** | **100** | **100** |
| | | | | | | | | | | | |
| LSS [MPa] | 0* | 19.1 | 24.3 | 25.2 | 26.9 | 27.1 | 24.3 | 24.8 | 25.2 | 25.7 | 26.1 |
| T-peel [N/mm] | 0* | 9.1 | 20.4 | 22.8 | 16.7 | 9.1 | 20.5 | 21.5 | 22.8 | 22.5 | 22.1 |
| IP [N/mm] | 0* | 40.2 | 45.1 | 55.4 | 32.9 | 20.2 | 55.6 | 55.8 | 55.4 | 54.1 | 53.8 |
| | | | | | | | | | | | |
| B/C2 | 0.0 | 50.6 | - | 50.6 | 50.6 | 50.6 | 50.6 | 50.6 | 50.6 | 50.6 | 50.6 |
| B/C1 | - | - | 11.0 | 11.0 | 11.0 | 11.0 | 22.1 | 14.7 | 11.0 | 8.8 | 7.4 |
| B/(C1 + C2) | 0.0 | 50.6 | 11.0 | 9.1 | 9.1 | 9.1 | 15.4 | 11.4 | 9.1 | 7.5 | 6.4 |
| C1/C2 | 0.0 | 0.0 | - | 4.6 | 4.6 | 4.6 | 2.3 | 3.4 | 4.6 | 5.7 | 6.9 |
| D/A | 1.4 | 1.4 | 1.4 | 1.4 | 0.9 | 0.5 | 1.4 | 1.4 | 1.4 | 1.4 | 1.4 |

## Claims

1. A thermosetting one-component epoxy resin composition comprising
a) at least one epoxy resin **A** having an average of more than one epoxy group per molecule;
b) at least one curing agent **B** for epoxy resins, where the curing agent **B** is a dihydrazide, preferably selected from the group consisting of aromatic dicarboxylic dihydrazide **B1** and aliphatic dicarboxylic dihydrazide **B2,** most preferably aliphatic dicarboxylic dihydrazide **B2;** and
c) at least one boron trihalide-amine complex **C1**;
d) at least one substituted urea **C2**;
e) at least one toughness improver **D**, preferably a terminally blocked polyurethane polymer **D1**;
wherein the molar ratio of the at least one boron trihalide-amine complex **C1** to the at least one substituted urea **C2 (C1/C2)** is 0.75 - 10 and the molar ratio of the at least one curing agent **B** for epoxy resins to the at least one boron trihalide-amine complex **C1 (B/C1)** is 4.5 - 55.

2. The thermosetting one-component epoxy resin composition as claimed in claim 1, **characterized in that** the curing agent **B** is an aromatic dicarboxylic dihydrazide **B1,** preferably selected from the group consisting of isophthalic dihydrazide and/or terephthalic dihydrazide, preferably isophthalic dihydrazide.

3. The thermosetting one-component epoxy resin composition as claimed in claim 1, **characterized in that** the curing agent **B** is an aliphatic dicarboxylic dihydrazide **B2,** preferably selected from the group consisting of glutaric dihydrazide, adipic dihydrazide, pimelic dihydrazide, 8,12-eicosadienedioic acid 1,20-dihydrazide and 4-isopropyl-2,5-dioxoimidazolidine-1,3-di(propionohydrazide), especially adipic dihydrazide.

4. The thermosetting one-component epoxy resin composition as claimed in any of the proceeding claims, **characterized in that** the molar ratio of the at least one boron trihalide-amine complex **C1** to the at least one substituted urea **C2 (C1/C2)** is 1.5 - 8, preferably 3-6, more preferably 4-5.

5. The thermosetting one-component epoxy resin composition as claimed in any of the preceding claims, **characterized in that** the molar ratio of the at least one curing agent **B** for epoxy resins to the at least one boron trihalide-amine complex **C1 (B/C1)** is 7 - 35, preferably 8.5 - 17.5, more preferably 5.5 - 14.

6. The thermosetting one-component epoxy resin composition as claimed in any of the preceding claims, **characterized in that** the molar ratio of the at least one curing agent **B** for epoxy resins to the sum of the molar amount of the at least one boron trihalide-amine complex **C1** and the at least one substituted urea **C2 (B/(C1+C2))** is 5 - 18, preferably 7 - 13.5, more preferably 8 - 10.

7. The thermosetting one-component epoxy resin composition as claimed in any of the preceding claims, **characterized in that** the at least one boron trihalide-amine complex **C1** is preferably selected from the list consisting of boron trichloride-amine complex and boron trifluoride-amine complex, preferably boron trichloride-amine complex, most preferably the boron trihalide-amine complex **C1** is a boron trichloride-dimethyloctylamine complex.

8. The thermosetting one-component epoxy resin composition as claimed in any of the preceding claims, **characterized in that** the at least one substituted urea **C2** is selected from the group consisting of p-chlorophenyl-N,N-dimethylurea (monuron), 3-phenyl-1,1-dimethylurea (fenuron), 3,4-dichlorophenyl-N,N-dimethylurea (diuron), N-methylurea, N,N-dimethylurea, N,N'-dimethylurea, N,N,N'-trimethylurea and N,N,N',N'-tetramethylurea, preferably N,N-dimethylurea.

9. The thermosetting one-component epoxy resin composition as claimed in any of the preceding claims, **characterized in that** the proportion of the epoxy resin **A** is 15-50% by weight, preferably 20-40% by weight, more preferably 25-35% by weight, based on the total weight of the one-component epoxy resin composition.

10. The thermosetting one-component epoxy resin composition as claimed in any of the preceding claims, **characterized in that** the ratio of the proportion of the sum of the epoxy groups of the epoxy resin **A** in mol / proportion of curing agent **B** in mol **(A/B)** is 2-6, preferably 3-5, most preferably 3.5-4.5.

11. The thermosetting one-component epoxy resin composition as claimed in any of the preceding claims, **characterized in that** the weight ratio of the at least one toughness improver **D** to the at least one epoxy resin **A (D/A)** is from 0.5 - 1.8, preferably from 1.0 - 1.7, more preferably 1.2 - 1.6.

12. The thermosetting one-component epoxy resin composition as claimed in any of the preceding claims, **characterized in that** the thermosetting one-component epoxy resin composition additionally includes at least one filler **F,** preferably selected from the group consisting of calcium carbonate, calcium oxide, talc, titanium oxide, and fumed silicas; preferably the total proportion of the filler F is 5-50 % by weight preferably 10-35 % by weight, more preferably 12.5-22.5 % by weight, based on the total weight of the thermosetting one-component epoxy resin composition.

13. The use of a thermosetting one-component epoxy resin composition as claimed in any of claims 1 to 12 as one-component thermosetting adhesive, especially as thermosetting one-component bodywork adhesive in motor vehicle construction.

14. A process for the adhesive bonding of heat-stable substrates, comprising the stages of:
i) applying a thermosetting one-component epoxy resin composition as claimed in any of claims 1 to 12 to the surface of a heat-stable substrate **S1,** especially of a metal;
ii) contacting the thermosetting one-component epoxy resin composition applied with the surface of a further heat-stable substrate **S2,** especially of a metal;
iii) heating the composition to a temperature of 100-220°C, especially of 120-200°C, preferably between 130 and 150°C, more preferably between 130 and 140°C;
in which the substrate **S2** consists of the same material as or a different material from the substrate **S1**.

15. The process as claimed in claim 14, wherein, in step iii) of heating the composition to a temperature of 100-220°C, especially of 120-200°C, preferably between 130 and 150°C, more preferably between 130 and 140°C, the composition is left at the aforementioned temperature for 10 min - 6 h, 10 min - 2 h, 10 min - 60 min, 10 min - 30 min, 10 min - 20 min, more preferably 10 min - 15 min.
